**Europäisches Patentamt**

**European Patent Office**

**Office européen des brevets**

(19)

(11) Veröffentlichungsnummer: **0 158 237**
**B1**

(12) **EUROPÄISCHE PATENTSCHRIFT**

(45) Veröffentlichungstag der Patentschrift: **19.09.90**

(21) Anmeldenummer: **85103762.2**

(22) Anmeldetag: **28.03.85**

(51) Int. Cl.⁵: **C 09 K 5/04**

(54) Verfahren zur Nutzung/Speicherung von Energie.

(30) Priorität: **07.04.84 DE 3413169**
**15.12.84 DE 3445810**

(43) Veröffentlichungstag der Anmeldung:
**16.10.85 Patentblatt 85/42**

(45) Bekanntmachung des Hinweises auf die
Patenterteilung:
**19.09.90 Patentblatt 90/38**

(84) Benannte Vertragsstaaten:
**AT BE CH DE FR GB IT LI NL SE**

(56) Entgegenhaltungen:
**EP-A-0 085 525**
**FR-A-2 465 970**
**GB-A-1 589 213**
**US-A-4 138 861**

(73) Patentinhaber: **Kali-Chemie Aktiengesellschaft**
**Postfach 220, Hans-Böckler-Allee 20**
**D-3000 Hannover 1 (DE)**

(72) Erfinder: **Schwetje, Norbert, Dr.rer.nat. Dipl.-Chem.**
**Theodor-Heuss-Ring 33**
**D-3000 Hannover 61 (DE)**
Erfinder: **Derleth, Helmut, Dipl.-Chem.Dr.rer.nat.**
**Grosse Drakenburger Strasse 58**
**D-3070 Nienburg (DE)**

(74) Vertreter: **Lauer, Dieter, Dr.**
**c/o Kali-Chemie Aktiengesellschaft Postfach 220**
**D-3000 Hannover 1 (DE)**

Courier Press, Leamington Spa, England.

**Beschreibung**

Die Erfindung betrifft ein Verfahren zur Nutzung/Speicherung von Energie sowie die Verwendung spezieller Speichermedien in solchen Verfahren.

Thermochemische Systeme zur Speicherung/Nutzung von Energie arbeiten nach dem Prinzip

$$A+B \underset{\text{Speicherung}}{\overset{\text{Nutzung}}{\rightleftharpoons}} AB+\text{Wärme}$$

Dabei bedeutet A ein Speichermedium im energiegeladenen Zustand, B den zugehörigen Reaktionspartner und AB das (energetisch entladene) Reaktionsprodukt.

Besonders vorteilhaft sind offene System, die auf der Adsorption/Desorption von Wasser basieren. Für diesen Fall bedeutet A ein zur Wasserbindung befähigtes Feststoff-Speichermedium, B ist Wasser und AB das feste wasserhaltige Reaktionsprodukt. Der Vorteil der offenen Systeme liegt darin, daß ein unfigtiges, nicht aggressives Stoffpaar eingesetzt wird und daß nur ein Reaktionspartner, nämlich das Speichermedium A gespeichert werden muß. Der Reaktionspartner B, also Wasser, kann je nach Bedarf von außen zugeführt oder nach außen abgeführt werden und wird bevorzugt gasförmig eingesetzt. Als Trägermaterial für das Wasser bzw. für die nutzbare Wärme oder zu speichernde Energie dient Luft. Bei der Sorption von Wasser wird dabei nutzbare Wärme frei; für die Desorption von Wasser (Speicherung von Energie), kann thermische Energie unterschiedlicher Herkunft verwendet werden. Es kann sowohl in üblicher Art mittels Primärenergie oder Elektrizität direkt beheizt werden oder es kann Abwärme ausgenutzt werden oder es kann Energie aus der Umwelt entweder direkt oder nach Transformation mittels einer Wärmepumpe ausgenutzt werden. Ein bekanntes gattungsgemäßes Verfahren zur Nutzung/ Speicherung von Energie ist beispielsweise in DE—OS 30 22 583 beschrieben.

Übliche Speichermedien für thermochemische Systeme, die bisher untersucht wurden sind Salze wie Lithium- oder Calciumchlorid, Säuren wie Schwefelsäure oder Phosphorsäure, Oxide wie Aluminiumoxid oder Siliciumdioxid, insbesondere Kieselgel oder Silicate wie synthetische oder natürliche Zeolithe.

Obwohl die thermochemischen, offenen, mittels Sorption/Desorption von Wasser arbeitenden Systeme bereits große Vorteile gegenüber Systemen aufweisen, die latente oder sensible Wärme speichern, sind sie doch noch verbesserungsfähig. So ist für die Mehrzahl der genannten Speichermedien der erreichbare Temperaturhub beim Entladen nicht hoch genug. Sofern der Temperaturhub groß genug ist, erfordert die Desorption aber sehr hohe Temperaturen, um Wasser vom Speichermedium bis auf praktisch brauchbare Restwassergehalte zu desorbieren und den Speicher ausreichend energetisch zu beladen. Ferner ist die nutzbare integrale Adsorptionsenthalpie bei den bekannten Speichermedien noch nicht befriedigend. Außerdem bleibt bei bekannten Speichermedien die Temperatur beim Entladen nicht oder nur für zu kurze Zeit auf dem Niveau des maximalen Temperaturhubs. Insbesondere für die praktische Nutzung thermochemischer Systeme ist aber ein langes Verweilen auf dem Niveau des maximalen Temperaturhubs während des Entladens wünschenswert.

Aufgabe der Erfindung ist es, die Nachteile des Standes der Technik zu überwinden. Die Aufgabe wird gelöst durch das in den Patentansprüchen angegebene Verfahren.

Das erfindungsgemäße Verfahren zur Nutzung/Speicherung von Energie arbeitet gattungsgemäß unter Verwendung eines mittels Sorption/Desorption von Wasser arbeitenden Speichermediums auf Zeolith-Basis und ist dadurch gekennzeichnet, daß man ein Speichermedium verwendet, daß Lithium- und/ oder Seltene Erdmetall (SE)-Ionen enthaltenden Zeolith Y enthält.

Die erfindungsgemäß zu verwendenden Speichermedien sind an sich bekannt. Sie werden bisher vornehmlich als Katalysatoren z.B. für Crack- oder für Alkylierungsverfahren eingesetzt.

Für die erfindungsgemäße Verwendung ist es vorteilhaft, einen Zeolith Y zu verwenden, in dem 10 bis 100 mol-%, vorzugsweise 40 bis 90 mol-% der austauschbaren Ionen durch Lithium- und/oder SE-Ionen ersetzt sind.

Besonders bevorzugt ist es, SE-Ionen enthaltenden Zeolith zu verwenden. Unter SE-Ionen werden dabei sowohl die Ionen nur eines SE-Metalles als auch Gemische von Ionen von mehreren SE-Metallen verstanden, Insbesondere kommen Ionen von Cer, Lanthan, Praseodym, Neodym, Samarium und/oder anderen SE-Metallen in Frage.

Das erfindungsgemäß zu verwendende Speichermedium kann in einer Variante allein aus dem ausgetauschten, Lithium- und/oder Se-Ionen enthaltenden Zeolith Y bestehen. Es ist aber möglich, daß das Speichermedium daneben weitere Bestandteile enthält wie z.B. feuerfeste Oxide wie Aluminiumoxid, Magnesiumoxid oder natürliche oder synthetische Zeolithe. Bevorzugt ist daß die weiteren Bestandteile aus anorganischem Oxidgel bestehen. Vorzugsweise ist der erfindungsgemäß zu verwendende Zeolith Y dabei in einer Matrix von anorganischem Oxidgel dispergiert. Das Speichermedium besteht dann bevorzugt aus 25—60 Gew.-%, vorzugsweise 30—50 Gew.-% Zeolith Y und 75—40 Gew.-%, vorzugsweise 70—50 Gew.-% anorganischem Oxidgel.

Als anorganisches Oxidgel kommt dabei bevorzugt Siliciumdioxid-Gel oder ein Mischgel aus Siliciumdioxid mit einem anderen Oxid eines Metalles in Frage. Letzteres ist bevorzugt ausgewählt aus den Gruppen II, IIa, III, IVa, des periodischen Systems der Elemente (in der Fassung gemäß Römpp, Chemielexikon, 7, Auflage 1974, Seite 2557). Besonders zu nennen sind die Oxide von Magnesium, Calcium, Aluminium, Titan, Zirkon, die in Form ihrer binären oder ternären Mischgele mit Siliciumdioxidgel eingesetzt werden. Besonder bevorzugte Kombination für ein binäres Mischgel ist Siliciumdioxid/ Aluminiumoxid.

Sofern als anorganisches Oxidgel Mischgele eingesetzt werden, so bestehen diese zu bis zu 25 Gew.-%, vorzugsweise bis zu 10 Gew.-% aus Metalloxid; der Rest des Mischgeles ist Siliciumdioxidgel.

Die Herstellung der erfindungsgemäß zu verwendenden Speichermedien ist an sich bekannt und beispielsweise in DE—OS 14 42 882 beschrieben, insbesondere auf S. 10 bis 16. Im Prinzip wird Zeolith Y durch Behandlung mit Lithium- und/oder SE-Metallsalzlösung einem Kationenaustausch unterworfen. Wird der ausgetauschte Zeolith Y als solcher als Speichermedium eingesetzt, so wird er nach dem Ionenaustausch getrocknet und calciniert. Soll der ausgetauschte Zeolith Y dagegen in anorganischem Oxidgel dispergiert eingesetzt werden, so wird das Speichermedium in an sich bekannter Weise hergestellt, z.B. durch Vermahlen von Oxidhydrogel mit ausgetauschtem Zeolith Y in einer Kugelmühle und Aufarbeitung durch Formung, Trocknung und Calcinieren oder insbesondere durch Dispergierung von ausgetauschtem Zeolith Y in Oxidhydrosol und anschließende Gelfällung und Aufarbeitung durch Trocknung und Calcinieren. Bei diesem Verfahren können direkt kugelförmige Speichermedien erhalten werden, die für die erfindungsgemäße Verwendung besonders vorteilhaft sind, da sie abriebfest sind, hohe Schüttdichte aufweisen und—sofern Sorption und Desorption räumlich getrennt erfolgen—leicht pneumatisch zu fördern sind.

Die erfindungsgemäß zu verwendenden Speichermedien zeichnen sich gegenüber herkömmlichen Speichermedien durch verschiedene Vorteile aus.

So liegt der beim Entladen (Energie-Nutzung) des Speichers erreichbare Temperaturhub ähnlich oder sogar über dem mit vergleichbaren Substanzen erreichbaren Hub. Ferner kann die nutzbare integrale Adsorptionsenthalpie gegenüber üblichen Speichermedien erhöht sein. Gerade dieser Aspekt ist für die praktische Nutzung besonders interessant. Verglichen mit dem bisherigen Stand der Technik kann damit bei gleicher Speichermasse die nutz- bzw. speicherbare Energiemenge erhöht werden bzw. bei gleicher nutz- bzw. speicherbarer Energiemenge die Speichermasse reduziert werden.

Außerdem ist beim Entladen ein langes Verweilen auf dem Niveau des maximalen Temperaturhubs zu beobachten. Damit steht für die praktische Nutzung beim Entladen die entnehmbare Wärme für lange Zeit auf ihrem höchsten Niveau zur Verfügung.

Ein weiterer Gebenstand der Erfindung ist die Verwendung eines Lithium- und/oder Seltene Erdmetall-Ionen enthaltenden Zeolith Y in Speichermedien für Adsorptionskühl/Klimatisierungs-Systemen.

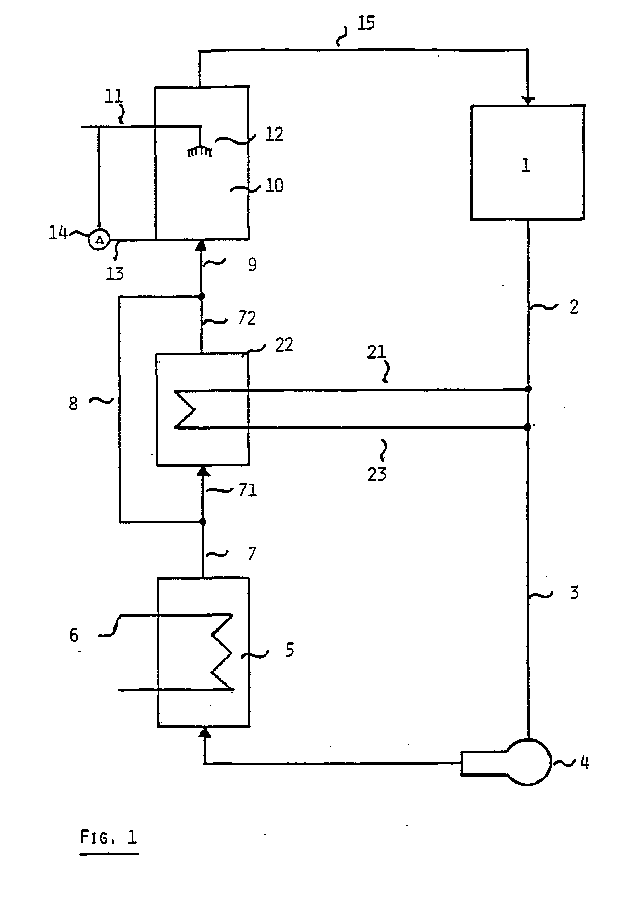

Adsorptionskühl/Klimatisierungs-Systeme (AKS) sind als solche bekannt. In Figur 1 ist beispielhaft das Prinzipschaltbild eines bekannten AKS angegeben. Aus dem zu kühlenden/klimatisierenden Raum 1 wird ein Luftstrom über Leitung 2 und 3 und Fördermittel 4 einer mit Speichermedium gefüllten Säule 5 zugeführt. In dieser Säule wird dem eintretenden feuchten Luftstrom durch Kontakt mit entwassertem, also energetisch geladenem Speichermedium Feuchtigkeit entzogen. Dieser Adsorptionsvorgang erfolgt dabei möglichst isotherm, wozu in der Säule 5 entstehende Adsorptionswärme über ein fludies Wärmetauschmedium abgeführt wird, das über Leitung 6 der Säule zugeführt wird und in wärmeaustauschendem Kontakt mit dem Speichermedium steht. Der die Säule 5 über Leitung 7 verlassende trockene Luftstrom befindet sich auf gleicher oder etwas erhöhter Temperatur wie der in die Säule 5 eintretende Luftstrom. Die auftretende Temperaturdifferenz ist dabei im wesentlichen abhängig von der Strömungsgeschwindigkeit des Luftstromes und der Intensität des Wärmetausches. Der trockene Luftstrom wird über Leitungen 8 und 9 einer Befeuchtungskammer 10 zugeleitet. In diese Kammer wird über Leitung 11 und Sprühvorrichtung 12 Wasser eingeleitet. Überschüssiges Wasser kann über Leitung 13 und Fördermittel 14 rückgeführt werden. Der in Kammer 10 eintretende trockene Luftstrom nimmt durch im wesentlichen adiabatisch geführte Verdampfung Wasserdampf bis zu seiner Sättigung unter gleichzeitiger Abkühlung auf, so daß ein kühler, feuchter Luftstrom aus Kammer 10 austritt, der über Leitung 15 dem Raum 1 zugeführt wird.

In einer Variation kann ein Wärmetauscher 22 zwischengeschaltet sein, in dem aus Raum 1 austretende Luft entweder vollständig oder teilweise über Leitung 21 heran und über Leitung 23 zurückgeführt wird und die im Wärmetauscher 22 mit der trockenen Luft in wärmeaustauschendem Kontakt steht. Zur Zu- und Abfuhr trockener Luft ist der Wärmetauscher 22 mit Leitungen 71 und 72 verbunden, über die der trockene Luftstrom vollständig oder teilweise geleitet werden kann.

Energetisch entladendes Speichermedium in Säule 5 kann in an sich bekannter Weise entwässert und damit energetisch geladen werden. Diese Entwässerung kann entweder kontinuierlich erfolgen, indem zwei oder mehrere Säulen 5 parallel geschaltet werden und mindestens je eine Säule zur ladung und Entladung zur Verfügung stehen. Es ist aber auch möglich, die Be- und Entladung kontinuierlich zu betreiben. Eine mögliche Ausführungsform dieser Variante ist, das Speichermedium im Gegenstrom zum Luftstrom durch Säule 5 zu führen und im Kreislauf über eine (in Fig. 1 nicht dargestellte) Regenerationssäule erneut Säule 5 zuzuführen.

Zur energetischen Beladung von Speichermedium kann thermische Energie unterschiedlicher Herkunft verwendet werden. Es kann sowohl in üblicher Art mittels Primärenergie oder Elektrizität direkt beheizt werden oder es kann Abwärme ausgenutzt werden, z.B. von konventionellen Heizsystemen oder Verbrennungsmotoren, oder es kann Energie aus der Umwelt, z.B. Solarenergie, entweder direkt oder nach Transformation mittels einer Wärmepumpe ausgenutzt werden.

Übliche bisher verwendete Speichermedien für AKS sind Kieselgel oder Zeolithe.

Die erfindungsgemäß zu verwendenden Speichermedien zeichnen sich gegenüber herkömmlichen Speichermedien von Adsorptionskühl/Klimatisierungs-Systemen durch verschiedene Vorteile aus.

Gegenüber Zeolith Y oder X in der Natrium-Form zeigen sie ab etwa 10% rF eine stark erhöhte Wasseradsorptionsfähigkeit. Ferner ist die energetische Beladung des erfindungsgemäßen Speichermediums bei tieferen Temperaturen möglich.

Gegenüber bisher verwendetem Kieselgel ergeben sich Vorteile bei der Wasseradsorptionsfähigkeit
a) im Bereich niedriger Luftfeuchten bis zu etwa 40% rF
b) im Bereich ab etwa 70% rF, was für den Einsatz in Gebieten mit aridem bzw. tropischem Klima bedeutsam ist, oder auch zur Klimatisierung von Räumen mit entsprechenden Klimabedingungen vorteilhaft ist.

Beispiele

A) Herstellung der Speichermedien

Die in den folgenden Beispielen verwendeten Speichermedien wurden nach folgender Arbeitsweise hergestellt.

A1) Kationenaustausch

Zeolith Y in der Na-Form wurde mit einer 25 Gew.-%-igen wässrigen Lösung von SE-Chlorid bzw. Lithiumchlorid bei Raumtemperatur kontaktiert und anschließend filtriert und getrocknet und gegebenenfalls calciniert. Durch Variation der Parameter Kontaktzeit, Temperatur und Druck wurden dabei unterschiedliche Mengen an SE- bzw. Lithium-Ionen in den Zeolith eingebaut. Die calcinierten Pulver wurden für den Einsatz als Speichermedium pelletiert.

A2) Herstellung von Speichermedien aus ausgetauschtem Zeolith Y in Oxidgel-Matrix

Eine wässrige Maische enthaltend 25 Gew.-% gemäß Beispiel A1 hergestellten, trockenen, ausgetauschten Zeolith wurde mit einer Wasserglaslösung (7,3 Gew.-% $Na_2O$, Dichte 1,3 g/ml) im Volumenverhältnis 10:8 vermischt. Dieses Gemisch wurde zur Koagulation mit einer sauren Lösung aus Schwefelsäure/Aluminiumsulfat (Gewichtsverhältnis 10:1) vereinigt und entsprechend der bekannten Sol-Gel-Fällung in ein Fallöl eingetropft. Der Mischungs-pH-Wert des zu gelierenden Systems betrug 7,5. Die resultierenden kugelförmigen Gelkörper wurden gealtert, zur Einstellung des Na-Gehaltes mit Aluminiumsulfat-Lösung behandelt, sulfatfrei gewaschen, getrocknet (180°C) und getempert (320°C).

Nach den Verfahren gemäß Versuch A1 bzw. A2 wurden folgende Speichermedien erhalten.

| Speichermedium | Art | Austauschgrad |
|---|---|---|
| A1.1 | SE-Zeolith Y | 40 Mol % |
| A1.2 | SE-Zeolith Y | 80 Mol % |
| A1.3 | Li-Zeolith Y | 40 Mol % |
| A1.4 | Li-Zeolith Y | 80 Mol % |

| Speichermedium | Art | Anteil Gel |
|---|---|---|
| A2.1 | A1.1+$SiO_2$ Gel | 60 Gew.-% |
| A2.1 | A1.2+$SiO_2$ Gel | 50 Gew.-% |

B) Einsatz der Speichermedien zur Speicherung/Nutzung von Energie

Die zur thermochemischen Speicherung relevanten Eigenschaften der verschiedenen Speichermedien wurden experimentell in einer Sorptionsapparatur mit folgendem Fließschema ermittelt.

Aussenluft wird zur Einstellung von Temperatur und relativer Feuchte mit Hilfe eines Gebläses über ein Reduzierventil und über einen Durchflußzähler einem thermostatisierten Luftbefeuchter zugeleitet. Der eingestellte Luftstrom durchströmt danach das Speichermedium in einer zylindrischen Kolonne (Volumen 1 Liter). Am Kolonnenein- und -ausgang werden relative Feuchte und Temperatur gemessen. Alle Daten werden über einen xt-Schreiber kontinuierlich registriert. Die prozentuale Wasseraufnahme der Substanzen wird gravimetrisch bestimmt. Separat werden für das jeweilige Speichermedium die Adsorptionsisothermen und die erreichbaren Temperaturerhöhungen beim Entladen des Speichers (maximaler Temperaturhub) bei vorgegebenen Parametern ermittelt. Aus den Adsorptionsisothermen, d.h. der Konzentration der Wasseranlagerung in Abhängigkeit von relativer Luftfeuchte und Temperatur, lassen sich die Energiespeicherdichte, die Temperaturabhängigkeit der Isotherme, die Isosteren mit dem Haftkoeffizienten und das Adsorptionspotential bestimmen.

Als Standardbedingungen für die in der folgenden Tabelle angeführten Meßergebnisse gelten folgende Parameter:

1) Die jeweils vermessene Menge an Speichermedium beträgt auf 1 kg Pellets bzw. Kugeln von 3—5 mm Durchmesser;

2) Der aktivierte Zustand der Speichermedien vor der Wärmefreisetzung ist 3% Restbeladung an Wasser;

3) Am Eingang der mit Speichermedium beladenen Kolonne war der Luftstrom auf 17°C und 100% relative Feuchte eingestellt.

Als Beurteilungskriterien werden für erfindungsgemäß zu verwendende Speichermedien und für Vergleichssubstanzen folgende Kenngrößen herangezogen:

$c_1$=die maximale Beladung mit Wasser; sie ist angegeben in g $H_2O$/kg Substanz und ergibt sich nach Gleichgewichtseinstellung mit dem vorgegebenen Luftstrom (17°C, 100 r.F.) an dem Speichermedium;

$\Delta H$=die erhaltene integrale Beladungsenthalphie; sie wird angegeben in KJ/kg Substanz und wird aus dem Produkt der gemessenen Luftströme mit dem eingestellten Feuchtegehalt, der spezifischen Wärme der Luft und dem Temperaturhub berechnet;

$\Delta T$=der Temperaturhub; er entspricht der Differenz der Temperaturen am Speicherkolonnenausgang zum -eingang, in der Tabelle bezeichnet $\Delta T$ max den maximalen Temperaturhub.

Die erhaltenen Meßergebnisse sind in der folgenden Tabelle dargestellt.

| Beispiel Nr. | Speichersubstanz | $\Delta T$ max | $\Delta H$ | $c_1$ |
|---|---|---|---|---|
| B1 | A1.1 | 42 | 1100 | 240 |
| B2 | A1.2 | 44 | 1200 | 240 |
| B3 | A1.3 | 45 | 980 | 260 |
| B4 | A1.4 | 46 | 920 | 260 |
| B5 | A2.1 | 45 | 1500 | 480 |
| B6 | A2.2 | 50 | 1550 | 520 |

| Vergleichs-Beispiel Nr. | Speichersubstanz | $\Delta T$ max | $\Delta H$ | $c_1$ |
|---|---|---|---|---|
| V1 | Na-Zeolith y | 41 | 850 | 160 |
| V2 | Na-Zeolith y 50 Gew.-% $SiO_2$-Gel | 38 | 560 | 240 |
| V3 | Na-Zeolith 4A 50 Gew.-% $SiO_2$-Gel | 43 | 590 | 250 |
| V4 | Na-Zeolith X 50 Gew.-% $SiO_2$-Gel | 33 | 450 | 190 |
| V5 | engporiges Kieselgel | 43 | 1200 | 400 |

Weitere Versuche wurden unter Abänderung der Randbedingungen wie folgt vorgenommen: Am Eingang der Speicherkolonne war der Luftstrom auf 14°C/100% rF eingestellt. Dabei wurden die in der nachfolgenden Tabelle angegebenen Meßwerte erhalten.

| Beispiel Nr. | Speichersubstanz | ΔT max | Haltezeit[1] |
|---|---|---|---|
| B7 | A1.2 | 22 | 2,5 |
| B8 | A1.4 | 21,5 | 2,0 |
| B9 | A2.2 | 20,5 | 7,5 |
| V6 | Ca-Zeolith Y | 18 | 0,5 |
| V7 | Na-Zeolith Y | 21 | 1,5 |
| V8 | engporiges Kieselgel | 20,5 | 0,1 |

[1] =Haltezeit=Zeit in Stunden, in der beim Entladen der maximale Temperaturhub erhalten bleibt.

C) Einsatz der Speichermedien für Adsorptionskühl/Klimatisierungs-Systeme

Die erfindungsgemäß hergestellten Speichermedien wurden in einem AKS entsprechend Fig. 1 eingesetzt und in ihrem Adsorptionsvermögen mit bekannten Substanzen verglichen.

In Säule 5 wurde Speichermedium A2.2 definierter Masse eingefüllt, das vorher energetisch beladen worden war durch Behandlung mit einem Luftstrom von 120°C, der auf einen Wasserdampfpartialdruck von 36 hPa eingestellt war. Über Fördermittel 4 wurde in Säule 5 ein feuchter Luftstrom mit der in Tabelle 1 jeweils angegebenen relativen Feuchtigkeit $p/p_0$ und einer Temperatur von 40°C über das Speichermedium geleitet. Die Adsorptionsenthalpie wurde abgeführt, so daß der über Leitung 7 austretende, trockene Luftstrom ebenfalls eine Temperatur von etwa 40°C aufweis. Zur Bestimmung der vom Speichermedium adsorbierten Wassermasse wurde das Speichermedium jeweils nach erfolgter Adsorption gewogen und die Gewichtszunahme bestimmt. Diese ist in Tabelle 1 als Δc (adsorbiertes Wasser in g/g Speichermedium) angegeben.

Entsprechende Vergleichsversuche wurden mit Zeolith 13× (Na-Form), engporigem Kieselgel und einem, in $SiO_2$-Gelmatrix eingebauten Zeolith Y der Natrium-Form (50% Gel, 50% Zeolith Y) unternommen. Auf die Ergebnisse dieser Versuche sind in Tabelle 1 aufgenommen.

Es ist deutlich die verbesserte Adsorptionskapazität der erfindungsgemäßen Speichermedien im Vergleich zu bekannten Speichermedien (Zeolith 13×, Kieselgel) zu erkennen.

Selbst gegenüber der bisher noch nicht als Speichermedien verwendeten Kombination Zeolith Y/ Gelmatrix ist eine erhebliche Verbesserung vorhanden. Die erhöhte Adsorptionskapazität stellt ein Maß für die Effizienz der Klimatisierung dar: Die größere, adsorbierte Wassermenge kann in der Befeuchtungskammer 10 erneut zugeführt werden und durch die adiabatische Führung der Verdampfung resultiert eine entsprechend größere Temperaturabsenkung des zur Klimatisierung verwendbaren Luftstromes.

TABELLE 1

| p/p$_0$ | Zeolith 13× | Kieselgel | Zeolith y/SiO$_2$ | A2.2 |
|---|---|---|---|---|
| | | ΔC | | |
| 0,05 | 0,07 | 0,03 | 0,04 | 0,08 |
| 0,10 | 0,09 | 0,05 | 0,06 | 0,10 |
| 0,15 | 0,10 | 0,07 | 0,09 | 0,13 |
| 0,20 | 0,10 | 0,09 | 0,11 | 0,14 |
| 0,25 | 0,11 | 0,11 | 0,13 | 0,15 |
| 0,30 | 0,11 | 0,13 | 0,13 | 0,16 |
| 0,35 | 0,11 | 0,16 | 0,14 | 0,17 |
| 0,40 | 0,12 | 0,18 | 0,15 | 0,17 |
| 0,50 | 0,13 | 0,23 | 0,16 | 0,22 |
| 0,60 | 0,14 | 0,28 | 0,18 | 0,26 |
| 0,70 | 0,14 | 0,31 | 0,20 | 0,30 |
| 0,80 | 0,14 | 0,33 | 0,22 | 0,36 |
| 0,85 | 0,15 | 0,35 | 0,23 | 0,41 |
| 0,90 | 0,15 | 0,36 | 0,23 | 0,45 |
| 0,95 | 0,16 | 0,36 | 0,24 | 0,48 |
| 1,00 | 0,17 | 0,37 | 0,25 | 0,52 |

**Patentansprüche**

1. Verfahren zur Nutzung/Speicherung von Energie unter Verwendung eines mittels Sorption/ Desorption von Wasser arbeitenden Speichermediums auf Zeolith-Basis, dadurch gekennzeichnet, daß man ein Speichermedium verwendet, das Lithium- und/oder Seltene Erdmetall-Ionen enthaltenden Zeolith Y enthält.

2. Verfahren nach Anspruch 1, dadurch gekennzeichnet, daß man einen Zeolith Y verwendet, in dem 10 bis 100 mol-%, vorzugsweise 40 bis 90 mol-% der austauschbaren Ionen durch Lithium und/oder Seltene Erdmetall-Ionen ersetzt sind.

3. Verfahren nach Anspruch 1, dadurch gekennzeichnet, daß man Seltene Erdmetall-Ionen enthaltenden Zeolith Y verwendet.

4. Verfahren nach einem der vorangehenden Ansprüche, dadurch gekennzeichnet, daß der Zeolith Y in einer Matrix aus anorganischem Oxidgel dispergiert ist.

5. Verfahren nach Anspruch 4, dadurch gekennzeichnet, daß man ein Gemisch aus 25 bis 60 Gew.-%, vorzugsweise 30 bis 50 Gew.-% Zeolith Y und 75 bis 40 Gew.-% vorzugsweise 70 bis 50 Gew.-% Oxidgel verwendet.

6. Verfahren nach Anspruch 4 oder 5, dadurch gekennzeichnet, daß das anorganische Oxidgel Siliciumdioxidgel oder ein Mischgel aus Siliciumdioxid mit einem Oxid eines Metalles der Gruppen II, IIa, III, IVa ist.

7. Verfahren nach Anspruch 6, dadurch gekennzeichnet, daß das Gel aus 0 bis 25 Gew.-%, vorzugsweise 0 bis 10 Gew.-% Metalloxid und 75 bis 100, vorzugsweise 90 bis 100 Gew.-% Siliciumdioxid besteht.

8. Verwendung eines Lithium- und/oder Seltene Erdmetall-Ionen enthaltenden Zeolith Y in Speichermedien für Verfahren zur Nutzung/Speicherung von Energie aus der Umwelt durch Sorption/ Desorption von Wasser.

9. Verwendung eines Lithium- und/oder Seltene Erdmetall-Ionen enthaltenden Zeolith Y in Speichermedien für Adsorptionskühl/Klimatisierungs-Systeme.

7

# EP 0 158 237 B1

## Revendications

1. Procédé d'utilisation/stockage de l'énergie en utilisant un milieu de stockage à base de zéolithe agissant par sorption/désorption de l'eau, caractérisé en ce qu'on utilise un milieu de stockage qui contient du zéolithe Y renfermant des ions de lithium et/ou de métaux des terres rares.

2. Procédé selon la revendication 1, caractérisé en ce qu'on utilise un zéolithe Y, dans lequel 10 à 100% de moles, de préférence 40 à 90% de moles des ions échangeables sont remplacés par des ions de lithium et/ou de métaux des terres rares.

3. Procédé selon la revendication 1, caractérisé en ce qu'on utilise du zéolithe Y contenant des ions de métaux des terres rares.

4. Procédé selon l'une des revendications précédentes, caractérisé en ce que le zéolithe Y se trouve en dispersion dans une matrice en gel d'oxyde minéral.

5. Procédé selon la revendication 4, caractérisé en ce qu'on utilise un mélange de 25 à 60% en poids, de préférence 30 à 50% en poids de zéolithe Y et de 75 à 40% en poids, de préférence de 70 à 50% en poids de gel d'oxyde.

6. Procédé selon la revendication 4 ou 5, caractérisé en ce que le gel d'oxyde minéral est du gel de dioxyde de silicium ou un mélange comprenant du gel de dioxyde de silicium avec un oxyde d'un métal des groupes II, IIa, III, IVa.

7. Procédé selon la revendication 6, caractérisé en ce que le gel contient 0 à 25% en poids, de préférence 0 à 10% en poids d'oxyde métallique et 75 à 100, de préférence 90 à 100% en poids de dioxyde de silicium.

8. Utilisation d'un zéolithe Y renfermant des ions de lithium et/ou de métaux des terres rares dans des milieux de stockage pour le procédé d'utilisation/stockage de l'énergie à partir de l'environnement par sorption/désorption d'eau.

9. Utilisation d'un zéolithe Y renfermant des ions de lithium et/ou de métaux des terres rares dans des milieux de stockage pour des systèmes de refroidissement par adsorption/de climatisation.

## Claims

1. Process for using/storing energy, using a storage medium on a zeolite basis and operating by means of sorption/desorption of water, characterised in that a storage medium is used which contains zeolite Y containing lithium ions and/or rare earth metal ions.

2. Process according to Claim 1, characterised in that a zeolite Y is used in which 10 to 100 mole percent, preferably 40 to 90 mole percent, of the exchangeable ions are replaced by lithium ions and/or rare earth metal ions.

3. Process according to Claim 1, characterised in that zeolite Y containing rare earth metal ions is used.

4. Process according to one of the preceding Claims, characterised in that the zeolite Y is dispersed in a matrix of inorganic oxide gel.

5. Process according to Claim 4, characterised in that a mixture of 25 to 60% by weight, preferably 30 to 50% by weight, zeolite Y and 75 to 40% by weight, preferably 70 to 50% by weight, oxide gel is used.

6. Process according to Claim 4 or 5, characterised in that the inorganic oxide gel is silicon dioxide gel or a mixed gel of silicon dioxide with an oxide of a metal of groups II, IIa, III or IVa.

7. Process according to Claim 6, characterised in that the gel consists of 0 to 25% by weight, preferably 0 to 10% by weight, metal oxide and 75 to 100, preferably 90 to 100% by weight silicon dioxide.

8. Use of a zeolite Y containing lithium ions and/or rare earth metal ions in storage media for processes for using/storing energy from the environment by sorption/desorption of water.

9. Use of a zeolite Y containing lithium ions and/or rare earth metal ions in storage media for adsorption cooling/conditioning systems.

**EP 0 158 237 B1**

FIG. 1

1